# EUROPÄISCHE PATENTSCHRIFT

(11) **EP 0 364 906 B1**
(45) Veröffentlichungstag und Bekanntmachung des Hinweises auf die Patenterteilung: **25.05.1994**
(21) Anmeldenummer: 89119104.1
(22) Anmeldetag: 14.10.1989
(51) Int. Cl.: F16K 17/38

(54) **Thermisches Sicherheitsventil**
Thermal safety valve
Vanne de sécurité thermique

(30) Priorität: 21.10.1988 DE 3835904
(43) Veröffentlichungstag der Anmeldung: 25.04.1990
(73) Patentinhaber: P+S ARMATUREN GmbH, 66482 Zweibrücken (DE)
(72) Erfinder: Höper, Gerhard, D-4300 Essen 1 (DE); Hüsselmann, Wilhelm, D-4330 Mülheim/Ruhr (DE); Steinberg, Siegfried, D-4300 Essen 15 (DE); Weizel, Erich, D-4300 Essen-Katernberg (DE)
(74) Vertreter: Hosbach, Hans Ulrich

(56) Entgegenhaltungen:
- GB-A- 1 068 645
- GB-A- 2 209 200
- US-A- 3 877 476
- DUBBEL,Taschenbuch für den Maschinenbau,14. Auflage, 1981.,S.1375

## Beschreibung

Die Erfindung betrifft ein thermisches Sicherheitsventil nach dem Oberbegriff des Anspruchs 1.

Derartige thermische Sicherheitsventile werden vor allen Dingen in der Gaswirtschaft eingesetzt, beispielsweise in Kombination mit Absperrarmaturen für Hauseinführungen. Derartige Absperrarmaturen sind in der Regel nicht temperaturfest. Kommt es zu einem Brand, so wird das thermische Sicherheitsventil automatisch ausgelöst und verschließt die Rohrleitung, und zwar unabhängig davon, ob die zugehörige Absperrarmatur offen oder geschlossen, hitzebeständig oder temperaturempfindlich ist. Auch unabhängig von zugehörigen Absperrarmaturen setzt man thermische Sicherheitsventile immer dort ein, wo eine automatische temperaturabhängige Absperrung erwünscht oder gar erforderlich ist.

Bei thermischen Sicherheitsventilen der eingangs genannten Art (siehe beispielsweise das DE-GM 77 37 537), dient die Feder nicht nur dazu, den Ventilkörper nach dem Auslösen der thermischen Schmelzmaterial-Sicherung in die Schließstellung zu verbringen, sondern sie erzeugt auch die Schließkraft, die den Ventilkörper auf dem Ventilsitz hält. Es wurde gefunden. daß diese Schließkraft in höheren Temperaturbereichen nicht ausreicht, einen sicheren Verschluß zu gewährleisten. Dies gilt insbesondere dann, wenn - wie es bei dem bekannten Sicherheitsventil der Fall ist - die Schließkraft gegen den Mediendruck arbeiten muß.

Der Erfindung liegt die Aufgabe zugrunde, ein thermisches Sicherheitsventil der eingangs genannten Art zu schaffen, welches auch bei extrem hohen Temperaturen einen wirksamen Verschluß gewährleistet.

Zur Lösung dieser Aufgabe weist das thermische Sicherheitsventil nach der Erfindung die im Kennzeichen von Anspruch 1 enthaltenen Merkmale auf.

Der Erfindung liegt die Erkenntnis zugrunde, daß das Versagen bekannter thermischer Sicherheitsventile bei hohen Temperaturen auf ein Erlahmen der Feder zurückzuführen ist.

Bei dem thermischen Sicherheitsventil nach der Erfindung dient die Feder lediglich dazu, den Ventilkörper in die Schließstellung zu verbringen und den Verschluß im niedrigen Temperaturbereich zu gewährleisten. Sobald die Temperatur ansteigt, dehnt sich der Führungsabschnitt des Ventilkörpers thermisch aus und verspannt sich gegen die Führung des Gehäuses. Je höher die Temperatur ansteigt, desto stärker wird die Verspannung, d.h. desto sicherer wird der Verschluß. Ob dabei die Feder erlahmt oder nicht, spielt keine Rolle mehr.

Weiterhin ist aus der GB-A 1068 645 ein thermisches Sicherheitsventil bekannt mit
einem Guß- Gehäuse,
einem in dem Gehäuse angeordneten kolbenförmigen Ventilkörper, der aus einer Öffnungsstellung in eine Schließstellung verschiebbar ist und der einen in einer Führung des Gehäuses verschieblichen Führungsabschnitt aufweist, wobei die kolbenmantelfläche des Ventilkörpers die Gehäusedurchgangsbohrung versperrt,
einer Feder, die den Ventilkörper in Schließrichtung verspannt, und
einer Schmelzmaterial-Sicherung, die den Ventilkörper in der Öffnungsstellung verriegelt, wobei
der Führungsabschnitt des Ventilkörpers aus einem Material besteht, dessen Wärmeausdehnunskoeffizient gegenüber dem des Materials der Führung des Gehäuses groß ist, so daß sich der Ventilkörper in der Schließstellung gegen die Führung des Gehäuses verspannen kann.

Der Ventilkörper kann aus Stahl oder Keramik bestehen, wobei sich eine thermische Verspannung nur dann ergeben kann, wenn für den Ventilkörper entsprechende Stahllegierungen gewählt werden. Bei Keramik ist eine Verspannung ersichtlich nicht möglich. Das bekannte Ventil ist nicht als Sitzventil sondern als Schieberventil ausgebildet mit zusätzlicher Schneidkante am Ventilkörper zum Entfernen von Rost und ähnlichen Ablagerungen. Die Arretierung in der Schließstellung wird durch einen gesonderten Sicherungsring gewährleistet.

Die konstruktive Gestaltung des erfindunsgemäßen Gegenstandes kann grundsätzlich beliebig getroffen werden, vorausgesetzt, daß die thermische Verspannung zwischen dem Ventilkörper und dem Gehäuse sichergestellt ist. Letzteres ist vorzugsweise dann problemlos gegeben, wenn Führung und Führungsabschnitt sich in der Schließstellung über eine erhebliche Länge, insbesondere auch im Bereich des Ventilsitzes überlappen.

Die Materialwahl steht im Belieben des Fachmanns, solange einerseits eine ausreichende Hitzebeständigkeit und andererseits die gewünschte thermische Verspannung gewährleistet sind. Vorzugsweise besteht der Ventilkörper aus Messing und die Führung des Gehäuses aus Stahl.

Ferner ist es besonders vorteilhaft, daß die Schmelzmaterial-Sicherung zwischen der Führung des Gehäuses und dem Führungsabschnitt des Ventilkörpers angeordnet ist.

Eine besonders einfache Konstruktion ergibt sich dadurch, daß der Ventilkörper in einer Hülse angeordnet ist und in seiner Außenfläche mindestens eine Ausnehmung aufweist, die in der Öffnungsstellung des Ventilkörpers einer Ausnehmung in der Innenfläche der Hülse gegenüberliegt, wobei die thermische Schmelzmaterial-Sicherung in den einander gegenüberliegenden Ausnehmungen angeordnet ist. Der Ventilkörper wird also in der Hülse geführt und bewegt sich nach seiner Freigabe in die Schließstellung. Die thermische Schmelzmaterial-Sicherung wird zwischen den Berührungsflächen von Ventilkörper und Hülse wirksam. Dabei besitzen die Berührungsflächen vorzugsweise eine beträchtliche axiale Erstreckung für ihre thermische Verspannung bei steigenden Temperaturen.

Dabei kann erfindungsgemäß eine der einander gegenüberliegenden ausnehmungen mindestens einen Stützkörper aus Schmelzmaterial enthalten, während in der anderen Ausnehmung ein Verriegelungskörper federnd abgestützt ist. In der Arretierstellung befindet sich der Verriegelungskörper in der Trennebene zwischen Ventilkörper und Hülse. Sobald der Stützkörper aus Schmelzmaterial flüssig wird, wandert der Verriegelungskörper in das flüssige Schmelzmaterial hinein und gibt den Ventilkörper frei. Auch kann ein Schmelzmaterial verwendet werden, welches sich während des Erweichungsvorganges ausdehnt. Dabei wird dann der Verriegelungskörper zu seiner Freigabe in die gegenüberliegende Ausnehmung hineingedrückt.

Als Alternative schlägt die Erfindung vor, daß die einander gegenüberliegenden Ausnehmungen mit Schmelzmaterial gefüllt sind. Diese Alternative ist deshalb besonders einfach, weil das Schmelzmaterial selbst den Verriegelungskörper bildet. Dabei ist es herstellungstechnisch besonders günstig, die einander gegenüberliegenden Ausnehmungen als umlaufende Nuten auszubilden. Die relative Drehstellung zwischen Ventilkörper und Hülse spielt also keine Rolle.

Auch läßt sich bei der zweitgenannten Alternative das Einbringen des Schmelzmaterials besonders einfach durchführen, und zwar dadurch, daß der Ventilkörper einen Hohlraum zur Aufnahme von Schmelzmaterial bildet, der über mindestens eine Öffnung mit der Ausnehmung des Ventilkörpers in Verbindung steht. Das Schmelzmaterial wird flüssig in den Hohlraum eingebracht oder innerhalb des Hohlraumes geschmolzen. Es fließt sodann durch die Öffnung in die einander gegenüberliegenden Ausnehmungen hinein und erstarrt bei anschließender Abkühlung.

Ferner schlägt die Erfindung vor, daß der Ventilsitz scharfkantig ausgebildet ist und daß der Ventilkörper eine komplementäre Schrägfläche aufweist. Damit läßt sich eine sehr zuverlässige Abdichtung erzielen, und zwar nicht nur unter der Wirkung der Feder, sondern auch bei thermischer Verspannung.

Das erfindungsgemäße Sicherheitsventil kann ferner dadurch gekennzeichnet sein, daß der Ventilkörper als Rohr ausgebildet ist, welches an dem dem Ventilsitz zugewandten Ende eine Verschlußwand aufweist. Ein derartiger Ventilkörper ist fertigungstechnisch einfach herzustellen und gewährleistet aufgrund seiner langgestreckten Form eine sehr gute Führung während der Schließbewegung sowie eine sehr gute Halterung und thermische Verspannung in der Schließstellung.

Ggf. kann die Schließkraft dadurch verstärkt werden, daß man den Ventilkörper mit dem Mediendruck beaufschlagt. Einfacher hingegen ist eine Druckfeder, die die Vorspannung des Ventilkörpers in Richtung auf den Ventilsitz erzeugt. Die Druckfeder kann ggf. von dem rohrförmigen Ventilkörper aufgenommen werden.

In wesentlicher Weiterbildung der Erfindung ist das Sicherheitsventil dadurch gekennzeichnet, daß der Ventilsitz von einer Einlaßöffnung einer Absperrarmatur gebildet wird, und daß der Einlaßöffnung ein Gehäuseansatz vorgelagert ist, welcher eine Umlenkung des Strömungsweges bildet. Auf diese Weise entsteht eine integrierte Baugruppe, die als kompakte Einheit montiert wird, wobei Zuflußrohr und Abflußrohr im Winkel zueinander stehen.

Insbesondere bei dieser Kompaktbauweise ist es aus konstruktiven Gründen vorteilhaft, daß die den Ventilkörper aufnehmende Hülse unter Bildung einer metallischen Dichtung mit dem Gehäuseansatz verschraubt ist.

Ferner bietet sich die Möglichkeit, den Mediendruck zur Unterstützung der Schließbewegung und zur Sicherung der Schließstellung heranzuziehen, und zwar dadurch, daß die Hülse an ihrem Ende geschlossen ist und daß der als einseitig geschlossenes Rohr ausgebildete Ventilkörper eine seitliche Öffnung aufweist, die während der Schließbewegung des Ventilkörpers in den Strömungsweg hineinwandert.

Die Erfindung wird im folgenden anhand bevorzugter Ausführungsbeispiele im Zusammenhang mit der beiliegenden Zeichnung näher erläutert. Die Zeichnung zeigt in:
- Fig. 1: einen Schnitt durch eine erste Ausführungsform eines erfindungsgemäßen Sicherheitsventils;
- Fig. 2: eine Einzelheit aus Fig. 1 in abgewandelter Ausführungsform;
- Fig. 3: einen Schnitt entsprechend Fig. 1 durch eine zweite Ausführungsform eines erfindungsgemäßen Sicherheitsventils.

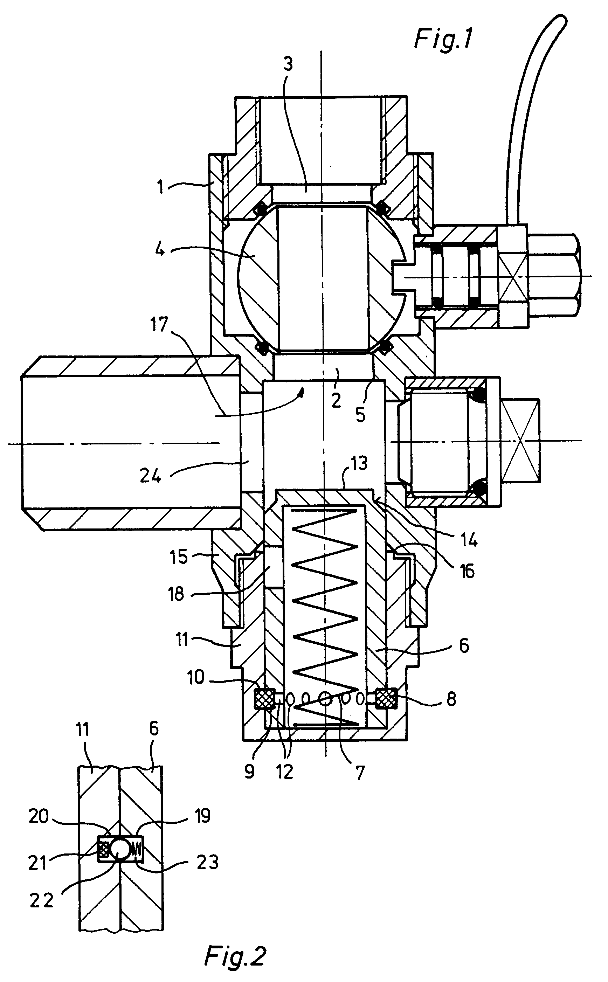

Nach Fig. 1 ist eine Absperrarmatur 1 vorgesehen, welche eine Einlaßöffnung 2 und eine Auslaßöffnung 3 aufweist. Die Absperrarmatur enthält in ihrem Inneren zwischen der Einlaßöffnung 2 und der Auslaßöffnung 3 ein wahlweise betätigbares Absperrelement 4, im vorliegenden Falle in Form einer Kugel.

Die Absperrarmtur 1 besteht aus Stahl und definiert mit der Einlaßöffnung 2 einen Ventilsitz 5 für einen Ventilkörper 6. Letzterer wird von einer Feder 7 in Richtung auf den Ventilsitz 5 vorgespannt. Er wird von Schmelzmaterial 8 in seiner Öffnungsstellung gehalten. Zur Aufnahme des Schmelzmaterials 8 weist der Ventilkörper 6 in seiner Außenfläche eine Ausnehmung 9 in Form einer Nut auf, die in der Öffnungsstellung einer Ausnehmung 10 in Form einer Nut in der Innenfläche einer Hülse 11 gegenüberliegt. Die Ausnehmung 9 steht über Öffnungen 12 mit dem Inneren des rohrförmigen Ventilkörpers 6 in Verbindung. Bei der Montage wird dieser Innenraum bis über den Pegel der Öffnungen 12 hinaus mit Schmelzmaterial gefüllt, welches bereits flüssig ist oder durch Erwärmung geschmolzen wird. Das Schmelzmaterial tritt durch die Öffnungen 12 in die Nuten ein und füllt diese aus. Nach dem Erkalten verriegelt es den Ventilkörper 6 mit der Hülse 11.

Die Absperrarmatur wird vor allen Dingen als Hauptabsperreinrichtung für Hausanschlüsse der öffentlichen Gasversorgung eingesetzt. Tritt ein Brand auf, so kommt es zu einer unzulässigen Erwärmung der Absperrarmatur. Dabei verflüssigt sich das Schmelzmaterial 8 und gibt den Ventilkörper 6 frei. Dieser wandert unter der Wirkung der Feder 7 in den Ventilsitz 5 hinein und versperrt die Einlaßöffnung des Gehäuses 1 mit seiner vorderen Verschlußwand 13. In der Schließstellung legt sich der Ventilkörper 6 mit einer komplementären Schrägfläche 14 auf den Ventilsitz 5 auf. Kommt es zu einer weiteren Erwärmung, so dehnt sich das Messingmaterial des Ventilkörpers 6 stärker als der Stahl der Hülse 11. Die Schließkraft nimmt also zu.

Ob bei steigenden Temperaturen die Dichtungen des Absperrelementes 4 zerstört werden oder nicht, spielt für die Funktion der erfindungsgemäßen Absperrarmatur keine Rolle. Die thermische Schmelzmaterial-Sicherung bleibt unter allen Umständen funktionsfähig, da die Versperrung der Einlaßöffnung 2 hitzebeständig ist.

Die Absperrarmatur 1 weist einen Gehäuseansatz 15 auf, in den die Hülse 11 eingeschraubt ist, und zwar unter Bildung einer metallischen Dichtung 16. Der Gehäuseansatz 15 definiert eine Umlenkung des Strömungsweges, wie es durch einen Pfeil 17 angedeutet ist. Er besteht ebenfalls aus Stahl, so daß sich der Ventilkörper 6 auch gegen ihn thermisch verspannt, und zwar bis in den Bereich des Ventilsitzes 5 hinein.

Der rohrförmige, vorne verschlossene Ventilkörper 6 weist eine Öffnung 18 auf, die während der Schließbewegung in den Strömungsweg hineinwandert. Der Mediendruck unterstützt also die Wirkung der Feder 7, und zwar sowohl während der Schließbewegung als auch in der Schließstellung.

Fig. 2 zeigt eine abgewandelte Ausführungsform der Schmelzmaterial-Sicherung. Hier weist der Ventilkörper 6 eine Ausnehmung 19 auf, die nicht als Nut ausgebildet ist. In der Schließstellung liegt ihr eine Ausnehmung 20 der Hülse 11 gegenüber. Die Ausnehmung 20 enthält einen Stützkörper 21 aus Schmelzmaterial. Auf diesem Stützkörper ruht ein Verriegelungskörper 22, welcher im vorliegenden Fall als Kugel ausgebildet ist. Der Verriegelungskörper 22 wird von einer Feder 23 gegen den Stützkörper 21 verspannt und liegt dabei in der Trennfläche zwischen dem Ventilkörper 6 und der Hülse 11. Eine Bewegung des Ventilkörpers ist nicht möglich.

Bei ansteigender Temperatur schmilzt der Stützkörper 21. Der Verriegelungskörper 22 kann daher in die ausnehmung 20 hineinwandern und den Ventilkörper 6 freigeben. Die Feder 23 stellt kein Hindernis dar.

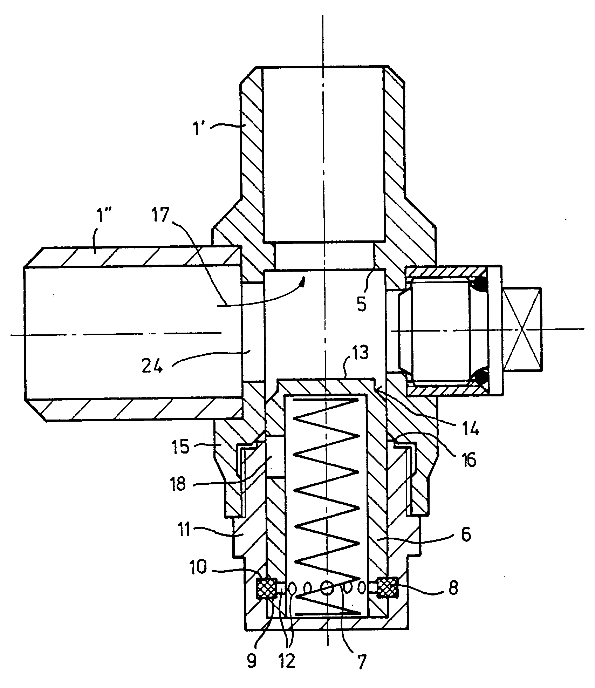

Die Ausführungsform nach Fig. 3 unterscheidet sich von der nach Fig. 1 dadurch, daß keine Absperrarmatur 1 vorgesehen ist. Vielmehr sitzt hier das Sicherheitsventil in einer Rohrleitung, die durch Leitungsabschnitte 1′ und 1˝ angedeutet ist. Dieses Sicherheitsventil findet überall dort Einsatz, wo ein automatischer, thermisch auslösbarer Verschluß erwünscht oder erforderlich ist, beispielsweise auch stromab einer Absperrarmatur, wie sie in Fig. 1 dargestellt ist.

Im Rahmen der Erfindung sind Abwandlungsmöglichkeiten gegeben. So kann die Anordnung nach Fig. 2 dergestalt umgekehrt werden, daß sich der Stützkörper 21 in der Ausnehmung 19 befindet, während die Feder 23 in der Ausnehmung 20 angeordnet ist.

Ferner muß der Ventilsitz 5 gemäß Fig. 1 nicht unbedingt von der Einlaßöffnung 2 der Absperrarmatur 1 gebildet werden. Vielmehr kommt hierfür beispielsweise auch eine Öffnung 24 im Gehäuseansatz 15 in Frage, allerdings mit der Maßgabe, daß der Ventilkörper 6 dann nicht mit dem Mediendruck, sondern gegen den Mediendruck abdichten muß. Ferner kann die Konstruktion von Hülse 11 und Gehäuseansatz 15 anders als dargestellt gestalten werden. Wesentlich ist, daß der gesamte Bereich von Ventilsitz 5 und Ventilkörper 6 ausschließlich metallische Dichtungen umfaßt. Dies gilt auch dann, wenn, was ohne weiteres möglich ist, die thermische Schmelzmaterial-Sicherung am Auslaßende der Absperrarmatur 1 angeordnet wird. Abweichend von Fig. 3 kann der Leitungsabschnitt 1′ als Krümmer ausgebildet sein und sich somit in der Richtung des Leitungsabschnitts 1˝ fortsetzen.

## Patentansprüche

1. Thermisches Sicherheitsventil mit
einem Gehäuse,
einem in dem Gehäuse angeordneten Ventilkörper (6), der aus einer Öffnungsstellung in eine Schließstellung verschiebbar ist und der einen in einer Führung des Gehäuses verschieblichen Führungsabschnitt aufweist,
einem Ventilsitz (5), der die Schließstellung des Ventilkörpers definiert,
einer Feder (7), die den Ventilkörper in Richtung auf den Ventilsitz verspannt, und
einer Schmelzmaterial-Sicherung, die den Ventilkörper in der Öffnungsstellung verriegelt,
**dadurch gekennzeichnet,**
daß der Führungsabschnitt des Ventilkörpers (6) aus einem Material besteht, dessen Wärmeausdehnunskoeffizient gegenüber dem des Materials der Führung des Gehäuses so groß ist, daß sich der Ventilkörper (6) in der Schließstellung gegen die Führung des Gehäuses verspannt.

2. Thermisches Sicherheitsventil nach Anspruch 1, dadurch gekennzeichnet, daß der Ventilkörper (6) aus Messing und die Führung des Gehäuses aus Stahl besteht.

3. Thermisches Sicherheitsventil nach Anspruch 1 oder 2, dadurch gekennzeichnet, daß die Schmelzmaterial-Sicherung zwischen der Führung des Gehäuses und dem Führungsabschnitt des Ventilskörpers (6) angeordnet ist.

4. Thermisches Sicherheitsventil nach Anspruch 3, dadurch gekennzeichnet, daß der Ventilkörper (6) in einer Hülse (11) angeordnet ist und in seiner Außenfläche mindestens eine Ausnehmung (9; 19) aufweist, die in der Öffnungsstellung des Ventilkörpers einer Ausnehmung (10; 20) in der Innenfläche der Hülse gegenüberliegt, wobei die thermische Schmelzmaterial-Sicherung in den einander gegenüberliegenden Ausnehmungen angeordnet ist.

5. Thermisches Sicherheitsventil nach Anspruch 4, dadurch gekennzeichnet, daß eine der einander gegenüberliegenden Ausnehmungen (19, 20) mindestens einen Stützkörper (21) aus Schmelzmaterial enthält, während in der anderen Ausnehmung ein Verriegelungskörper (22) federnd abgestützt ist.

6. Thermisches Sicherheitsventil nach Anspruch 4, dadurch gekennzeichnet, daß die einander gegenüberliegenden Ausnehmungen (9, 10) mit Schmelzmaterial (8) gefüllt sind.

7. Thermisches Sicherheitsventil nach Anspruch 6, dadurch gekennzeichnet, daß die einander gegenüberliegenden Ausnehmungen (9, 10) als umlaufende Nuten ausgebildet sind.

8. Thermisches Sicherheitsventil nach Anspruch 6 oder 7, dadurch gekennzeichnet, daß der Ventilkörper (6) einen Hohlraum zur Aufnahme von Schmelzmaterial bildet, der über mindestens eine Öffnung (12) mit der Ausnehmung (9) des Ventilkörpers in Verbindung steht.

9. Thermisches Sicherheitsventil nach einem der Ansprüche 1 bis 8, dadurch gekennzeichnet, daß der Ventilsitz (5) scharfkantig ausgebildet ist und daß der Ventilkörper (6) eine komplementäre Schrägfläche (14) aufweist.

10. Thermisches Sicherheitsventil nach einem der Ansprüche 1 bis 9, dadurch gekennzeichnet, daß der Ventilkörper (6) als Rohr ausgebildet ist, welches an dem dem Ventilsitz (5) zugewandten Ende eine Verschlußwand (13) aufweist.

11. Thermisches Sicherheitsventil nach einem der Ansprüche 1 bis 10, dadurch gekennzeichnet, daß der Ventilsitz (5) von einer Einlaßöffnung (2) einer Absperrarmatur (1) gebildet wird und daß der Einlaßöffnung ein Gehäuseansatz (15) vorgelagert ist, welcher eine Umlenkung des Strömungsweges (Pfeil 17) bildet.

12. Thermisches Sicherheitsventil nach Anspruch 11, dadurch gekennzeichnet, daß die den Ventilkörper (6) aufnehmende Hülse (11) unter Bildung einer metallischen Dichtung (16) mit dem Gehäuseansatz (15) verschraubt ist.

13. Thermisches Sicherheitsventil nach einem der Ansprüche 4 bis 12, dadurch gekennzeichnet, daß die Hülse (11) an ihrem Ende geschlossen ist und daß der als einseitig geschlossenes Rohr ausgebildete Ventilkörper (6) eine seitliche Öffnung (18) aufweist, die während der Schließbewegung des Ventilkörpers in den Strömungsweg (Pfeil 17) hineinwandert.

## Claims

1. Thermal safety valve including a housing, a valve body (6) which is arranged in the housing and which is movable out of an open position into a closed position and which has a guide section which is movable in a guide on the housing, a valve seat (5) which defines the closed position of the valve body, a spring (7) which urges the valve body in the direction towards the valve seat, and a fusible material fastening which locks the valve body in the open position, characterised in that the guide section of the valve body (6) comprises a material whose coefficient of thermal expansion is so large with respect to that of the material of the guide on the housing that, in the closed position, the valve body (6) is jammed against the guide on the housing.

2. Thermal safety valve as claimed in Claim 1, characterised in that the valve body (6) comprises brass and the guide on the housing comprises steel.

3. Thermal safety valve as claimed in Claim 1 or 2, characterised in that the fusible material fastening is arranged between the guide on the housing and the guide section on the valve body (6).

4. Thermal safety valve as claimed in Claim 3, characterised in that the valve body (6) is arranged in a sleeve (11) and in its outer surface has a recess (9; 19) which, in the open position of the valve body, is opposed to a recess (10; 20) in the inner surface of the sleeve, the thermal fusible material fastening being arranged in the opposing recesses.

5. Thermal safety valve as claimed in Claim 4, characterised in that one of the opposing recesses (19, 20) contains at least one support body (21) of fusible material whilst a locking body (22) is resiliently supported in the other recess.

6. Thermal safety valve as claimed in Claim 4, characterised in that the opposing recesses (9, 10) are filled with fusible material (8).

7. Thermal safety valve as claimed in Claim 6, characterised in that the opposing recesses (9, 10) are constructed as peripheral grooves.

8. Thermal safety valve as claimed in Claim 6 or 7, characterised in that the valve body (6) defines a hollow space for receiving fusible material which is in communication with the recess (9) in the valve body by means of at least one opening (12).

9. Thermal safety valve as claimed in one of Claims 1 to 8, characterised in that the valve seat (5) is of sharp edged construction and that the valve body (6) has a complementary oblique surface (14).

10. Thermal safety valve as claimed in one of Claims 1 to 9, characterised in that the valve body (6) is constructed as a tube which has a closure wall (13) at the end directed towards the valve seat (5).

11. Thermal safety valve as claimed in one of Claims 1 to 10, characterised in that the valve seat (5) is defined by an inlet opening (2) of a shut-off valve (1) and that a housing neck (15), which constitutes a deflection in the flow path (arrow 17), is positioned upstream of the inlet opening.

12. Thermal safety valve as claimed in Claim 11, characterised in that the sleeve (11) accommodating the valve body (6) is screwed to the housing neck (15) to form a metallic seal (16).

13. Thermal safety valve as claimed in one of Claims 4 to 12, characterised in that the sleeve (11) is closed at its end and that the valve body (6), which is constructed as a tube closed at one end, has a lateral opening (18) which moves, into the flow path (arrow 17) during the closing movement of the valve body.

## Revendications

1. Soupape de sécurité thermique, avec
un carter, un corps de soupape (6) disposé dans le carter, déplaçable d'une position d'ouverture à une position de fermeture et présentant une section de guidage, mobile dans un guidage de carter,
un siège de soupape (5), définissant une position de fermeture du corps de soupape,
un ressort (7), sollicitant le corps de soupape en direction du siège de soupape, et
une sécurité en matériau fusible, verrouillant le corps de soupape dans la position d'ouverture,
caractérisée en ce que
la section de guidage du corps de soupape (6) est en un matériau dont le coefficient de dilatation thermique par rapport à celui du matériau de guidage du carter est d'une valeur telle que le corps de soupape (6) se serre contre le guidage du carter, dans la position de fermeture.

2. Soupape de sécurité thermique selon la revendication 1, caractérisée en ce que le corps de soupape (6) est en laiton et le guidage du carter en acier.

3. Soupape de sécurité thermique selon la revendication 1 ou 2, caractérisée en ce que la sécurité en matériau fusible est disposée entre le guidage de carter et la section de guidage du corps de soupape (6).

4. Soupape de sécurité thermique selon la revendication 3, caractérisée en ce que le corps de soupape (6) est disposé dans une douille (11) et présente sur sa surface extérieure au moins un évidement (9; 19) qui, dans la position d'ouverture du corps de soupape, et situé en face d'un évidement (10; 20) ménagé dans la surface intérieure de la douille, la sécurité thermique en matériau fusible étant disposée dans les évidements se faisant mutuellement face.

5. Soupape de sécurité thermique selon la revendication 4, caractérisée en ce que l'un des deux évidements (9; 19) se faisant face contient au moins un corps d'appui (21) en matériau fusible, tandis qu'un corps de verrouillage (22) prend appui, de façon élastique, dans l'autre évidement.

6. Soupape de sécurité thermique selon la revendication 4, caractérisée en ce que les évidements (9; 10) se faisant mutuellement face sont remplis d'un matériau fusible.

7. Soupape de sécurité thermique selon la revendication 6, caractérisée en ce que les évidements (9; 10) se faisant mutuellement face sont réalisés sous forme de gorges circulaires

8. Soupape de sécurité thermique selon la revendication 6 ou 7, caractérisée en ce que le corps de soupape (6) forme un espace creux pour recevoir du matériau fusible, relié, par au moins une ouverture (12), à l'évidement (9) du corps de soupape.

9. Soupape de sécurité thermique selon l'une des revendications 1 à 8, caractérisée en ce que le siège de soupape (5) est réalisé à angle vif et en ce que le corps de soupape (6) présente une surface inclinée complémentaire (14).

10. Soupape de sécurité thermique selon l'une des revendications 1 à 9, caractérisée en ce que le corps de soupape (6) est réalisé sous forme de tube présentant une paroi d'obturation (13), sur l'extrémité tournée vers le siège de soupape (5).

11. Soupape de sécurité thermique selon l'une des revendications 1 à 10, caractérisée en ce que le siège de soupape (5) est formé par une ouverture d'admission (2), d'une armature d'isolement (1) et en ce que, devant l'ouverture d'admission, est monté un appendice de carter (15) formant une déviation pour le trajet d'écoulement (flèche 17).

12. Soupape de sécurité thermique selon la revendication 11, caractérisée en ce que la douille (11) recevant le corps de soupape (6) est vissée à l'appendice de carter (15) en formant une étanchéité métallique (16).

13. Soupape de sécurité thermique selon l'une des revendications 4 à 12, caractérisée en ce que la douille (11) est fermée à son extrémité et en ce que le corps de soupape (11), réalisé sous forme de tube fermé à une extrémité, présente une ouverte latérale (18), qui se déplace dans le chemin d'écoulement (flèche 17) pendant le déplacement de fermeture du corps de soupape.
